# EUROPEAN PATENT APPLICATION

(11) **EP 2 386 684 A1**
(43) Date of publication of application: **16.11.2011**
(21) Application number: 10003972.6
(22) Date of filing: 15.04.2010
(51) Int. Cl.: D21H 19/24, D21H 23/56, D21H 27/00, C09J 7/04, C09J 7/02

(54) **Release paper and method for its production**

(71) Applicant: T.I. Commerce Corporation, Chou-Ku Tokyo 103-0022 (JP)
(72) Inventor: Fanelli, Francis, A, 22076 Mozzate (CO) (IT)
(74) Representative: Cacciamani, Clizia

(57) **Abstract**

Release paper comprising a continuous layer of carrier material such as paper or the like, on which at least one layer of a suitably moldable material is deposited, said material comprising a mixture of polymeric materials, characterized in that said mixture includes at least two polymeric resins comprising at least one first thermoplastic resin and at least one second reactive thermosetting resin; there are also described the method for the production of such a paper and the apparatus for the implementation of such a method.

## Description

The present invention relates to the so-called release paper, that is a paper or similar carrier which is provided with suitable and conveniently shaped release coatings on one side thereof in order to allow for the production of artificial leathers or similar materials. The invention relates also to a method for the production of said release paper, and to the apparatus used for carrying out such a method.

Several types of release papers are known, and therefore various methods for the production thereof are known. In the art of the release papers, the methods for the application of release substances to a paper carrier are carried out either by extrusion in the case of polyolefin and melamine-based substances, or by spreading and leveling by means of an air blade in the case of silicone-based substances. Each method and final product has specific features which make it more or less suitable to meet the different requirements in the production of synthetic leather.

A very pertinent aspect regarding to such a product is that, on one hand, the release material which is deposited onto the paper and used to make certain decorative patterns on the artificial leather should have a good structural stability, so that the processing to be carried out on the surface of the artificial leather can be definite and aesthetically effective; on the other hand, a good shapeability of the same resin should be assured, so as to allow the embossment rolls carrying the selected decorative pattern to leave a sharp and reliable impression during the processing of the artificial leather.

Therefore, the aim of the present invention is to provide a release paper having improved performance in terms both of stability and shapeability so as to give an increased operational and qualitative yield. Another aim of the present invention is to provide a method for the preparation of the release paper according to the invention, as well as an apparatus intended for carrying out such a method.

Therefore, an object of the present invention is a release paper comprising a continuous layer of carrier material such as paper or the like, on which at least one layer of a suitably moldable material is deposited, said material comprising a mixture of at least two polymeric resins, characterized in that said polymeric resins include at least one first thermoplastic resin and at least one second reactive thermosetting resin. In a preferred embodiment, said first resin accounts for at least 50 parts by weight per 100 parks of the whole mixture; preferably, said first resin is from about 50 to 98 parts by weight of said mixture, in combination with at least one reactive thermosetting resin in an amount ranging from about 1 to 25 parts by weight.

The mixture further comprises substances such as release agents, polymerization accelerators, opaque fillers and the like in a total amount ranging from about 1 to 25 parts by weight. A preferred polymerization accelerator is p-toluenesuffonic acid; silicones can be used as the release agents, and silica and derivatives thereof can be used as the opaque fillers.

In a preferred embodiment, said first resin is present in the mixture from about 60 to 75 parts by weight, and the reactive thermosetting resin is present from about 10 to 20 parts by weight. Particularly, two different reactive thermosetting resins can be present, both resins being each present in an amount ranging from about 5 to 10 parts by weight.

Preferably, said first thermoplastic resin includes saturated polyesters, particularly polyesters having an average molecular weight ranging from 2000 to 10000, preferably of 4000.

The reactive thermosetting resins can be selected from the group of formaldehyde-based thermosetting resins, and particularly they can be formaldehyde-urea resins or formaldehyde-melamine resins.

The polymeric material is deposited onto the paper carrier as one or more layers to form a coating having a coating density of about 5 g/m² to 50 g/m² with respect to the dry product.

Another object of the present invention is a method for the preparation of a release paper, particularly in the manufacture of artificial leathers or the like, comprising the steps of: preparing a mixture of polymeric materials; depositing at least one layer of said mixture onto the carrier; drying the deposited layer of material at a given temperature; and winding the resulting product into coils.

In a preferred embodiment, the drying step can be followed by an additional heating step, at a temperature greater than the temperature used for drying, in order to terminate the polymerization of the material deposited on the carrier.

In a preferred variant embodiment, the material as wound into coils is embossed by suitable patterned rolls which are heated to a temperature greater than the drying temperature, so that the paper is further heated following the embossment.

Particularly, the drying temperature is from about 70 to 90°C, preferably about 80°C. instead, the additional heating temperature is from about 110 to 130°C, preferably about 120°C.

The polymeric material can be deposited onto the carrier by using any technique as commonly known in the art of the relevant field; techniques deemed suitable to this end include spreading the polymeric material by means of a doctor blade either in combination with a counter-roll or alone, and depositing the polymeric material by means of a reverse roll either in combination with a counter-roll or alone.

Alternatively, the polymeric material can be deposited by a system comprising two ore more rolls for depositing the polymeric material, which rolls are arranged in series within a device comprising a pass-through station with a heat-controlled environment following each deposition station for the mixture of polymeric materials.

Another object of the present invention is an apparatus for the production of a release paper according to the method of the present invention, comprising at least one application station for a mixture of polymeric materials, at least one drying station, and a winding station. Preferably, there are provided two application stations for the mixture of polymeric materials and two respective drying stations. In an embodiment of the apparatus there is advantageously provided a heat-treatment station. In another variant embodiment, the paper is taken from the winding station and passed through an embossing station in which it is processed at a temperature greater than the temperature used at the drying station.

Other advantages and features of the present invention will be apparent from the following description of a preferred embodiment thereof which is provided by way of illustration, and not by way of limitation, with reference to the one accompanying drawing in which:
Figure 1 is a schematic diagram of an embodiment of the system for the production of a release paper according to the present invention;
Figure 2 is a side elevation view, with sectioned parts, of a preferred variant embodiment of the method and apparatus according to the present invention.

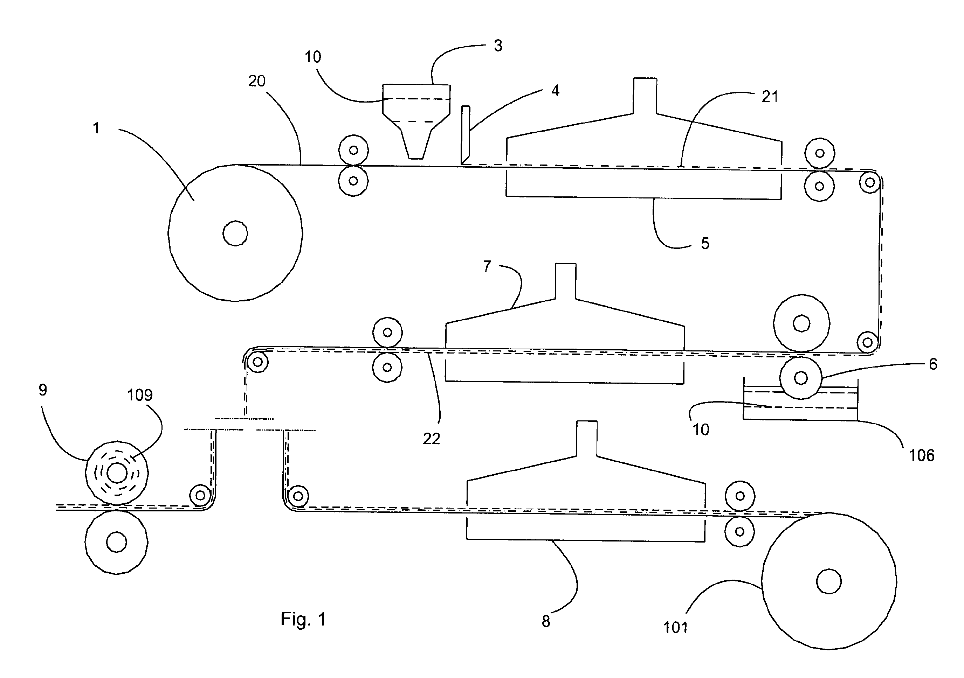

In Figure 1 there is shown a schematic diagram of an embodiment of the system according to the present invention; reference numeral 1 denotes the reel on which the carrier, typically a continuous paper tape or the like, is wound. The carrier 20 is conveyed up to the spreading station, where the feeder 3 pours the mixture of polymeric materials 10 onto the carrier, the mixture being spread by means of the doctor blade 4 as the first coating layer 21. Thereafter, the carrier 2 with the first layer 21 are passed through the drying oven 5 and then subjected to a subsequent deposition of the mixture of polymeric materials 10 by means of the roll 6, which draws the mixture out from the container 106 to apply it to the carrier 20 as the second layer 22, which is then transferred to an additional drying oven 7.

At this time, the resulting release paper can be subjected to a further heat-treatment at the oven 8 and then wound onto the reel 101. Alternatively, it can be processed by the embossment roll 9 provided with heating means 109.

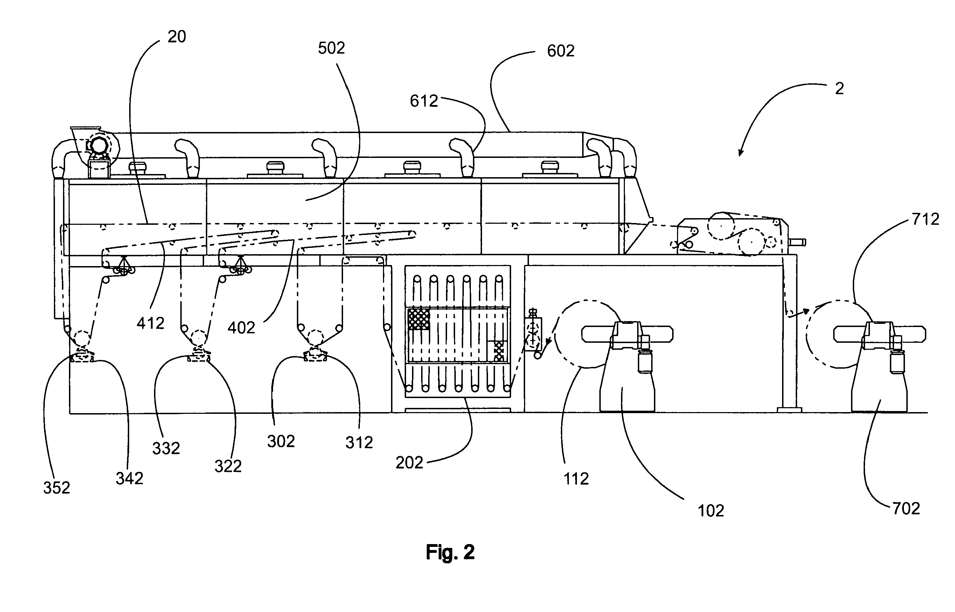

In Figure 2 there is shown a variant embodiment of the apparatus as generally illustrated and described above. In such a case, the deposition of the layers of polymeric materials occurs at the station 2, comprising a reel 112 mounted to an uncoiler 102 which feeds the carrier tape 20 towards a compensating assembly 202. The tape is fed by the compensating assembly, which is of a per se known type, towards the first roll 312 which draws the polymeric material out from the tank 302 to deposit it onto the tape 20. After the deposition, the tape is passed through a path length 402 running inside the oven 502, which is fed through the manifold 602 and tubes 612. After the length 402, rolls 332 and 352 are arranged in series with respect to the roll 312, the rolls 332 and 352 being fed from tanks 322 and 342 respectively; between roll 332 and roll 352 there is located the path length 412 running inside the oven 502 as the path length 402. When the last deposition step is completed, i.e. beyond the roll 352, the carrier 20 as coated with the polymeric material is passed through the oven 502 over the whore length thereof, up to the reel 712 mounted to the coiler 702.

The operation of the method according to the present invention and the properties of the resulting paper will be apparent from the following. As already mentioned above, a mixture of polymeric materials is produced such as to fully meet the objects of the present invention; practically, a mixture is formed which includes a saturated polyester, preferably a saturated polyester having an average molecular weight of about 4000, and a formaldehyde-based resin which can be either an urea/formaldehyde resin or a melamine/formaldehyde resin. Several tests has been performed, and the best results have been found to be obtained with a two-component resin comprising the saturated polyester and one of the two formaldehyde-based resins, in an amount of about 67 parts per 100 parts by weight of saturated polyester and 18 parts of urea/formaldehyde resin or melamine/formaldehyde resin.

Since the saturated polyester resin is thermoplastic, it allows the material to retain a high plastic behavior even after the drying step, which is conveniently performed at a temperature which is sufficient to evaporate the solvents but still sufficiently low to avoid the complete polymerization of the mixture. Therefore, the drying step will be carried out at a temperature of about 80°C, while the heat-treatment step should be performed at a very higher temperature, and particularly at a temperature of about 120°C, in order to completely polymerize the material as deposited on the carrier.

The deposition of the resin can be carried out a number of times, as it is apparent from the example as shown; both the systems are definitively alternative. The overall thickness can range from 5 to 50 g/m² according to the type of processing in which the resulting release paper is intended to be used. As it is apparent from the figure, each deposition step should correspond to a drying step. In the variant embodiment of Figure 2 it can be noted that the deposition of material may occur during subsequent, minor steps, in this case taking advantage of an improved ability in delivering the polymeric material onto the surface of the carrier. For example, one could conceive a deposition of about 10 g/m² per roll in order to deposit an overall layer of 30 g/m², resulting in an apparently improved ability in spreading the polymeric material onto the carrier.

When the deposition is completed, the release paper of the invention can be wound into coils as it is, i.e. without a heat-treatment for terminating the polymerization of the mixture; in this case, the resulting release paper will have a smooth surface. Conversely, when the paper is processed by means of an embossment roll provided with heating means as in one of the variant embodiments shown in the figure, then the surface is appropriately shaped for a further processing, and the polymerization of the mixture of polymeric materials is also completed. The embossment is carried out in a very effective manner due to the very fact that the mixture as deposited on the paper is still not completely polymerized and it retains a high plastic behavior, as already discussed.

Among the other things, the release paper according to the present invention has the great advantage that it is manufactured in such a way that the intermediate product, as obtained after the deposition step and which can be embossed, is dry and stable, so that the further processing appears to be extremely easy to be performed. It can be even commercialized as said intermediate, provided that the user can carry out a further processing. Therefore, the method according to the invention is designed to allow for a complete versatility of use.

## Claims

1. Release paper comprising a continuous layer of carrier material such as paper or the like, on which at least one layer of a suitably moldable material is deposited, said material comprising a mixture of polymeric materials, **characterized in that** said mixture includes at least two polymeric resins comprising at least one first thermoplastic resin and at least one second reactive thermosetting resin.

2. Release paper according to claim 1, wherein said first resin accounts for at least 50 parts by weight per 100 parts of the whole mixture.

3. Release paper according to claim 2, wherein said first resin is from about 50 to 98 parts by weight of said mixture, in combination with at least one reactive thermosetting resin in an amount ranging from about 1 to 25 parts by weight.

4. Release paper according to claim 2 or 3, wherein said mixture further comprises substances such as release agents, polymerization accelerators, opaque fillers and the like in a total amount ranging from about 1 to 25 parts by weight.

5. Release paper according to any one of claims 2 to 4, wherein said first resin is present in the mixture from about 60 to 75 parts by weight, and the reactive thermosetting resin is present from about 10 to 20 parts by weight.

6. Release paper according to any one of the preceding claims 1 to 5, wherein two different reactive thermosetting resins are present in said mixture.

7. Release paper according to any one of the preceding claims 1 to 6, wherein said first thermoplastic resin includes a saturated polyester.

8. Release paper according to any one of the preceding claims 1 to 7, wherein the reactive thermosetting resin is selected from the group of formaldehyde-based thermosetting resins.

9. Release paper according to claim 8, wherein said reactive thermosetting resin is a formaldehyde/urea resin or a formaldehyde/melamine resin.

10. Method for the preparation of a release paper, particularly in the manufacture of artificial leathers or the like, comprising the steps of: preparing a mixture of polymeric materials; depositing at least one layer of said mixture onto a continuous carrier; drying the deposited layer of material at a given temperature; and winding the resulting product into coils.

11. Method according to claim 10, wherein the drying step can be followed by an additional heating step at a temperature greater than the temperature used for drying, in order to terminate the polymerization of the material deposited on the carrier.

12. Method according to claim 10, wherein the carrier as coated with the mixture of polymeric materials and wound into coils is embossed by suitable patterned rolls which are heated to a temperature greater than the drying temperature.

13. Method according to any one of the preceding claims 10 to 12, wherein the drying temperature is from about 70 to 90°C, and preferably about 80°C.

14. Method according to any one of the preceding claims 10 to 12, wherein the additional heating temperature is from about 110 to 130° C, and preferably about 120°C.

15. Method according to any one of the preceding claims 10 to 14, wherein the mixture of polymeric materials is spread by means of a doctor blade either in combination with a counter-roll or alone.

16. Method according to any one of the preceding claims 10 to 14, wherein the mixture of polymeric materials is deposited by means of a I reverse roll either in combination with a counter-roll or alone. i

17. Method according to any one of the preceding claims 10 to 14, wherein the mixture of polymeric materials is deposited by means of a device comprising a number of rolls (312, 332, 352) drawing polymeric material out from respective tanks (302, 322, 342) and depositing it onto the continuous carrier (20), the mixture being concurrently passed through drying means (502) located between two deposition rolls (312, 332, 352) adjacent to each other.

18. Apparatus for the manufacture of a release paper based on the method according to any one of the preceding claims 10 to 17, comprising at least one deposition station for a mixture of polymeric materials, at least one drying station, and a winding station.

19. Apparatus according to claim 19, wherein there are provided two deposition stations for the mixture of polymeric materials and two respective drying stations.

20. Apparatus according to claim 19 or 20, wherein there is provided a heat-treatment station.

21. Apparatus according to claim 19 or 20, wherein the paper is taken from the winding station and passed through an embossing station in which it is processed at a temperature greater than the temperature used at the drying station.
